# EUROPEAN PATENT APPLICATION

(11) **EP 1 655 060 A1**
(43) Date of publication of application: **10.05.2006**
(21) Application number: 04292624.6
(22) Date of filing: 04.11.2004
(51) Int. Cl.: A63F 13/10

(54) **A computer game system**

(71) Applicant: ALCATEL, 75008 Paris (FR)
(72) Inventor: Coppens, Toon, 2500 Lier (BE); Brackx, Michael Frederik Francois Albert, 9000 Gent (BE)
(74) Representative: Narmon, Gisèle Marie Thérèse

(57) **Abstract**

Computer game systems (10) for playing computer games and comprising memories (12) for storing main information (1) defining main parts of the computer games and interfaces (13) for downloading auxiliary information (3) defining auxiliary parts of the computer games from remote generators (22) and processors for processing the main information (1) in dependence of control information (6) offer more possibilities to players by processing the main information (1) with respect to the auxiliary information (3) in α non-synchronized way. At receiver-generator locations (21) different from interface-processor locations (11), remote receivers (23) receive trigger information (4) from transmitters (32) and the remote generators (22) generate the auxiliary information (3). The transmitters (32) are remote transmitters located at transmitter locations (31) different from the receiver-generator locations (21) and different from the interface-processor locations (11).

## Description

The invention relates to a computer game system for playing a computer game and comprising
- a memory for storing main information, which main information defines a main part of the computer game;
- an interface for downloading auxiliary information from a remote generator, which auxiliary information defines an auxiliary part of the computer game; and
- a processor for processing the main information in dependence of control information.
   A prior art computer game system is known from US 6,726,567, which discloses a simulated real time game play with a live event. As disclosed explicitly in its column 4 lines 45-49, raw data (auxiliary information) is downloaded from a sensor (a remote generator) to a computer (a processor) via a network. Such auxiliary information defines an auxiliary part of the computer game. Then, implicitly, main information stored in a memory and defining a main part of the computer game will be processed in the computer (the processor) in dependence of control information originating from a player and in dependence of the auxiliary information.
   The known computer game system is disadvantageous, inter alia, owing to the fact that a simulated real time game play with a live event offers a relatively small number of possibilities to a player. The player cannot exert influence on the live event.
   It is an object of the invention, inter alia, to provide a computer game system as defined in the preamble which offers a relatively large number of possibilities to a player.
   The computer game system according to the invention is characterized in that the processor is arranged to process the main information with respect to the auxiliary information in a non-synchronized way.
   By arranging the processor to process the main information with respect to the auxiliary information in a non-synchronized way, the auxiliary information is not used continuously, but is used discontinuously. In other words, the auxiliary information is not used all the time, but is used only at a few moments in time. At all other moments in time, the player has a larger freedom to do whatever the player wishes to do, which results in a larger number of possibilities. Further, the outcome of the computer game will be less predictable owing to the lack of synchronization.
   The main information is information that can be run without the auxiliary information being used. The opposite is usually not possible, the auxiliary information can usually not be run independently from the main information.
   Instead of stating that the processor is arranged to process the main information with respect to the auxiliary information in a non-synchronized way, alternatively it could be stated that the main information and the auxiliary information are independently triggered, individually triggered and/or separately triggered (or user/player triggered). Generally, the processor is arranged to process the main information in dependence of a larger number of interactions with the control information (such as for example > 100) and in dependence of a smaller number of interactions with the auxiliary information (such as for example < 10).
   It should be noted that US 6,726,567 discloses in its column 7 lines 11-21 that synchronization between a live event and a live event simulation can be maintained by interpolation. Although in this case the number of interactions between the main information and the auxiliary information is reduced, the main information and the auxiliary information are still synchronized. It should further be noted that US 6,726,567 discloses in its column 7 lines 34-45 that a simulated participation is possible with a play back of a recording of a live event. Of course, in this case the main information and the auxiliary information are still synchronized too.
   An embodiment of the computer game system according to the invention is characterized in that the auxiliary information defines a starting condition of the computer game, the processor being arranged to process the main information from a start of the computer game until an end of the computer game and the interface being arranged to download the auxiliary information before the start of the computer game.
   By arranging the processor to process the main information from a start of (a phase of) the computer game until an end of (the phase of) the computer game and by arranging the interface to download the auxiliary information before the start of (the phase of) the computer game, which auxiliary information defines a starting condition of (the phase of) the computer game, the main information is processed with respect to the auxiliary information in a completely independent, individual and/or separated way, which results in a further increased number of possibilities.
   An embodiment of the computer game system according to the invention is characterized in that the computer game system is further defined by
- a downloading phase situated before a start of the computer game for downloading the auxiliary information for defining a starting condition of the computer game; and
- a playing phase situated after the start of the computer game for processing the main information in dependence of the control information.
   By introducing the downloading phase and the playing phase, the main information is processed with respect to the auxiliary information in a completely independent, individual and/or separated way, which results in a further increased number of possibilities.
   An embodiment of the computer game system according to the invention is characterized in that the computer game system further comprises
- a remote receiver for receiving trigger information from a transmitter; and
- the remote generator for generating the auxiliary information.
   The remote receiver and the remote generator allow the auxiliary information to be downloaded from a remote receiver-generator location, such as for example a location where a live event is taking place or has taken place or has been stored. The auxiliary information is for example generated in response to a reception of the trigger information. The trigger information may either result in relatively directly downloading the auxiliary information or may result in relatively delayedly downloading the auxiliary information. In the latter case, the trigger information may either comprise a time/date indication or may be linked to a time/date indication.
   A embodiment of the computer game system according to the invention is characterized in that the computer game system further comprises
- the transmitter for transmitting the trigger information to the remote receiver.
   The transmitter, such as for example a personal computer or a mobile phone, allows the trigger information to be transmitted to the remote receiver.
   An embodiment of the computer game system according to the invention is characterized in that the transmitter is a remote transmitter, with the remote receiver and the remote generator being located at a receiver-generator location different from an interface-processor location and with the remote transmitter being located at a transmitter location different from the receiver-generator location and different from the interface-processor location.
   The three different locations allow a player at a transmitter location to visit a live event or to watch a broadcast of a live event and allow the player to download the auxiliary information from the receiver-generator location to the interface-processor location. The receiver-generator location may be an umbrella location for two different sub-locations, a receiver location and a generator location, and the interface-processor location may be an umbrella location for two different sub-locations, an interface location and a processor location.
   An embodiment of the computer game system according to the invention is characterized in that the processor is arranged to process the main information in an entirely artificial way.
   Contrary to US 6,726,567, which discloses in its column 2 lines 56-61 that remote participants compete with real participants in a live event, the computer game system according to the invention may be an entirely artificial game.
   An embodiment of the computer game system according to the invention is characterized in that the interface is arranged to download the auxiliary information in a non-periodical way.
   Contrary to US 6,726,567, which discloses in its column 7 lines 1-10 that periodic transmissions are used to synchronize a live event simulation with a live event, the computer game system according to the invention may download the auxiliary information in a non-periodical way.
   The invention also relates to a processor for use in a computer game system for playing a computer game, which processor is arranged to process main information in dependence of control information, which main information defines a main part of the computer game, the computer game system comprising an interface for downloading auxiliary information from a remote generator, which auxiliary information defines an auxiliary part of the computer game.
   The processor according to the invention is characterized in that the processor is arranged to process the main information with respect to the auxiliary information in a non-synchronized way.
   The invention also relates to an interface for use in a computer game system for playing a computer game, which interface is arranged to download auxiliary information from a remote generator, which auxiliary information defines an auxiliary part of the computer game, the computer game system comprising a processor for processing main information in dependence of control information, which main information defines a main part of the computer game.
   The interface according to the invention is characterized in that the processor is arranged to process the main information with respect to the auxiliary information in a non-synchronized way.
   The invention further relates to a method for playing a computer game and comprising the steps of
- downloading auxiliary information from a remote generator, which auxiliary information defines an auxiliary part of the computer game; and
- processing main information in dependence of control information, which main information defines a main part of the computer game.
   The method according to the invention is characterized in that the processing step is performed with respect to the auxiliary information in a non-synchronized way.
   The invention further relates to a processor program product for playing a computer game and comprising the functions of
- downloading auxiliary information from a remote generator, which auxiliary information defines an auxiliary part of the computer game; and
- processing main information in dependence of control information, which main information defines a main part of the computer game.
   The processor program product according to the invention is characterized in that the processing function is performed with respect to the auxiliary information in a non-synchronized way.
   The invention further relates to a remote receiver for use in a computer game system for playing a computer game, which computer game system comprises
- a memory for storing main information, which main information defines a main part of the computer game;
- an interface for downloading auxiliary information from a remote generator, which auxiliary information defines an auxiliary part of the computer game; and
- a processor for processing the main information in dependence of control information.
   The remote receiver according to the invention is characterized in that the processor is arranged to process the main information with respect to the auxiliary information in a non-synchronized way, the remote receiver being arranged for receiving trigger information from a transmitter and the remote generator being arranged to generate the auxiliary information in response to a reception of the trigger information.
   The invention further relates to a transmitter for use in a computer game system for playing a computer game, which computer game system comprises
- a memory for storing main information, which main information defines a main part of the computer game;
- an interface for downloading auxiliary information from a remote generator, which auxiliary information defines an auxiliary part of the computer game; and
- a processor for processing the main information in dependence of control information.

The transmitter according to the invention is characterized in that the processor is arranged to process the main information with respect to the auxiliary information in a non-synchronized way, the transmitter being arranged to transmit trigger information to a remote receiver, the remote receiver being arranged to receive the trigger information from the transmitter and the remote generator being arranged to generate the auxiliary information in response to a reception of the trigger information.

Embodiments of the processor according to the invention and of the interface according to the invention and of the method according to the invention and of the processor program product according to the invention and of the remote receiver according to the invention and of the transmitter according to the invention correspond with the embodiments of the computer game system according to the invention.

The invention is based upon an insight, inter alia, that a prior art simulated real time game play with a live event offers a relatively small number of possibilities to a player owing to the fact that the simulated live event is always synchronized with the (recorded) live event, and is based upon a basic idea, inter alia, that, to increase the number of possibilities offered to a player, the processing of the main information with respect to the auxiliary information should be non-synchronized.

The invention solves the problem, inter alia, to provide a computer game system as defined in the preamble which offers a relatively large number of possibilities to a player, and is advantageous, inter alia, in that the outcome of the computer game will be less predictable owing to the lack of synchronization.

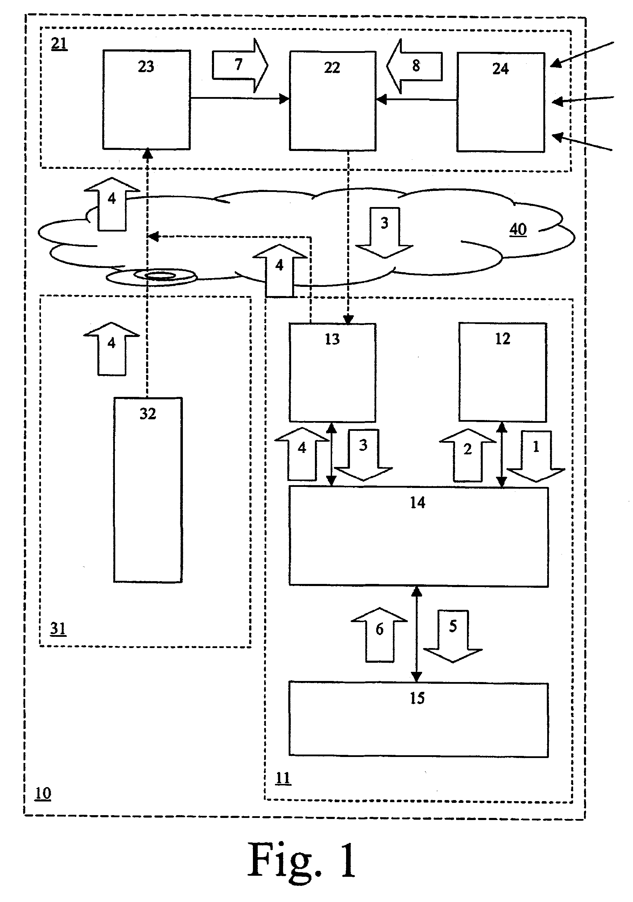

These and other aspects of the invention will be apparent from and elucidated with reference to the embodiments(s) described hereinafter.
Fig. 1 shows diagrammatically a computer game system according to the invention;
Fig. 2 shows a first overview of a computer game system according to the invention;
Fig. 3 shows a second overview of a computer game system according to the invention;
Fig. 4 shows a third overview of a computer game system according to the invention; and
Fig. 5 shows a fourth overview of a computer game system according to the invention.
   The computer game system 10 according to the invention shown in Fig. 1 comprises, at an interface-processor location 11, a memory 12 coupled to a processor 14 according to the invention, which processor 14 is further coupled to an interface 13 according to the invention and to a man-machine-interface 15 or mmi 15. At a receiver-generator 21, a remote receiver 23 is coupled to a remote generator 22, which remote generator 22 is further coupled to a sensor 24. At a transmitter location 31, a remote transmitter 32 is present. The locations 11,21,31 are separated from each other by a network 40 .
   From mmi 15, the processor 14 receives control information 6 for processing main information 1 stored in memory 12. 1. This main information 1 defines a main part of a computer game. The transmitter 32 transmits trigger information 4 to the remote receiver 23 via the network 40. The remote generator 22 receives sensor information 8 from the sensor 24 and converts the sensor information 8 into auxiliary information 3. This auxiliary information 3 defines an auxiliary part of the computer game and is for example downloaded in response to a reception of the trigger information 4 via the network 40 and the interface 13 to the processor 14. The remote generator 22 is informed via reception information 7 that the remote receiver 23 has received the trigger information 4. Alternatively, the auxiliary information 3 may be stored in/near the remote generator 22 after being converted such that it can be downloaded at a later stage. So, the trigger information 4 may either result in relatively directly downloading the auxiliary information 3 or may result in relatively delayedly downloading the auxiliary information 3. In the latter case, the trigger information 4 may either comprise a time/date indication or may be linked to a time/date indication.
   The main information 1 is information that can be run without the auxiliary information 3 being used. The opposite is usually not possible, the auxiliary information 3 can usually not be run independently from the main information 1.
   The auxiliary information 3 may be stored in memory 12, in which case the processor 14 will supply further auxiliary information 2 to the memory 12. When processing the main information 1, the processor 14 will generate output information 5 to the mmi 15. Alternatively, the transmitter may form part of the processor 14, which processor 14 then transmits the trigger information 4 via the interface 13 and the network 40 to the remote receiver 23.
   The control information 6 may comprise mouse information in case of the mmi 15 comprising a mouse, joystick information in case of the mmi 15 comprising a joystick, and/or keyboard information in case of the mmi 15 comprising a keyboard etc. The output information 5 may comprise display information in case of the mmi 15 comprising a display, and/or loudspeaker information in case of the mmi 15 comprising a loudspeaker etc.
   In a prior art situation, the sensor 24 comprising one or more sub-sensors picks up information from a live event such as for example a car race and sends sensor information 8 to the remote generator 22 all the time and/or periodically. The remote generator 22 converts the sensor information 8 such as for example car positions into the auxiliary information 3 and sends the auxiliary information 3 via the interface 13 to the processor 14. This processor 14 further receives control information from mmi 15 and processes the main information 1 such as for example a computer car race game in dependence of the auxiliary information 3 and the control information 6. As a result, a player at mmi 15 can participate in the car race.
   According to the invention, the player is offered more possibilities by letting the processor 14 process the main information 1 with respect to the auxiliary information 3 in a non-synchronized way. In other words, according to the invention, the remote generator 22 no longer sends the auxiliary information all the time and/or periodically to the interface 13. As a result, for example during the live event in the from of the car race, the car positions are supplied to the processor 14, the player starts the car race computer game and enters the car race computer game with his own car at a car position somewhere between or behind the other car positions, and from that moment on all other cars are no longer driven in correspondence with the live event, but are driven in a simulated way by the processor 14.
   Preferably, the auxiliary information 3 may define a starting condition of the computer game. Then the interface 13 may download the auxiliary information 3 before a start of (a phase of) the computer game, and the processor 14 may process the main information 1 from the start of (the phase of) the computer game until an end of (the phase of) the computer game. In other words, the computer game system 10 may be defined by a downloading phase situated before a start of (the phase of) the computer game for downloading the auxiliary information 3 for defining a starting condition of the computer game, and a playing phase situated after the start of (the phase of) the computer game for processing the main information 1 in dependence of the control information 6.
   In other words, the processor 14 may process the main information 1 in an entirely artificial way, and/or the interface 13 may download the auxiliary information 3 in a non-periodical way.
   Other live events are not to be excluded, such as for example a football match. The sensor information 8 may then for example comprise the names of the football players in the field and their positions, and - in case of the match already being started - their behavior in the match (yellow cards, number of committed faults, distances run) etc. The player at mmi 15 may then replace one of the football players by a simulated character and take the place of this football player etc. As a result, the player starts the football computer game and enters the football computer game with his own character at a position somewhere between the other characters, and from that moment on all other characters no longer act in correspondence with the live event, but act in a simulated way by the processor 14.

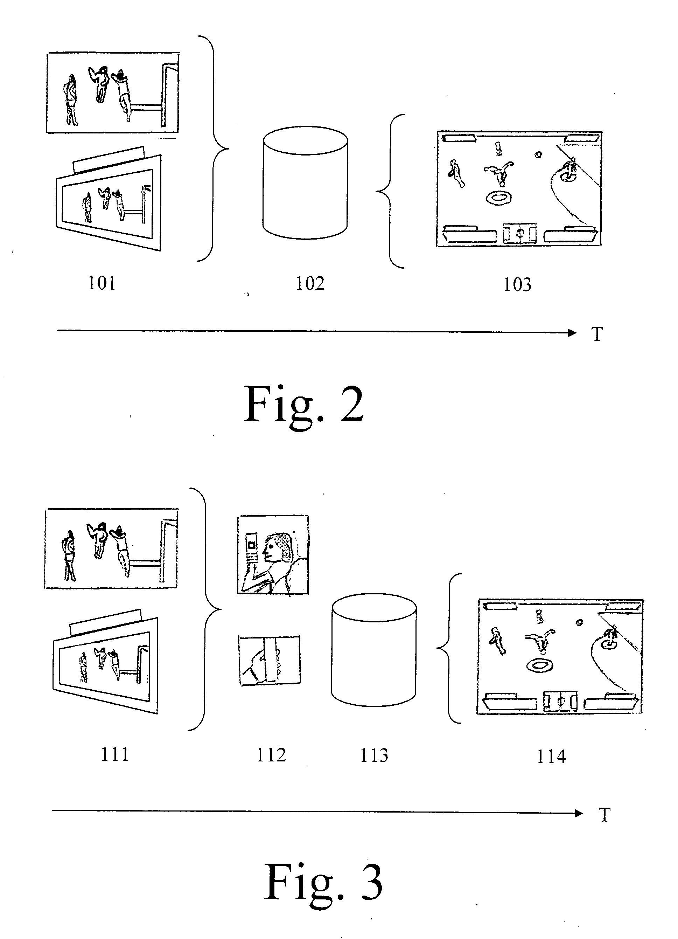

   In Fig. 2 a first overview of a computer game system 10 according to the invention is shown. A user visiting a live event 101 or watching a live event 101 on the television gets the idea of using auxiliary information from the live event 101 and takes care of either storing this auxiliary information in a database 102 or of retrieving this auxiliary information from the database 102 in which it is already (being) stored. At a later stage in time T, the user can play the computer game 103 thereby using the auxiliary information.
   In Fig. 3 a second overview of a computer game system 10 according to the invention is shown. A user visiting a live event 111 or watching a live event 111 on the television gets the idea of using auxiliary information from the live event 111 and triggers via a transmitter 112 in the form of a mobile phone or a remote control the storage of this auxiliary information in a database 113 or triggers via a transmitter 112 in the form of a mobile phone or a remote control the retrieving of this auxiliary information from the database 113 in which it is already (being) stored. At a later stage in time T, the user can play the computer game 114 thereby using the auxiliary information. The trigger information must comprise a first identifier for identifying the auxiliary information and a second identifier for identifying the user and/or the user's processor-interface. In case of the transmitter being a mobile phone, the first identifier may be a telephone number (possibly followed by an additional number) etc. and the second identifier may be the user's mobile telephone number or the user's subscription number (which both may be linked to the user's processor-interface) etc. In case of the transmitter being a remote control, both identifiers may need to be converted by a remote control interface or a set top box into telephone numbers or internet addresses etc. So, a further embodiment of a transmitter may comprise a personal computer coupled to the internet etc.

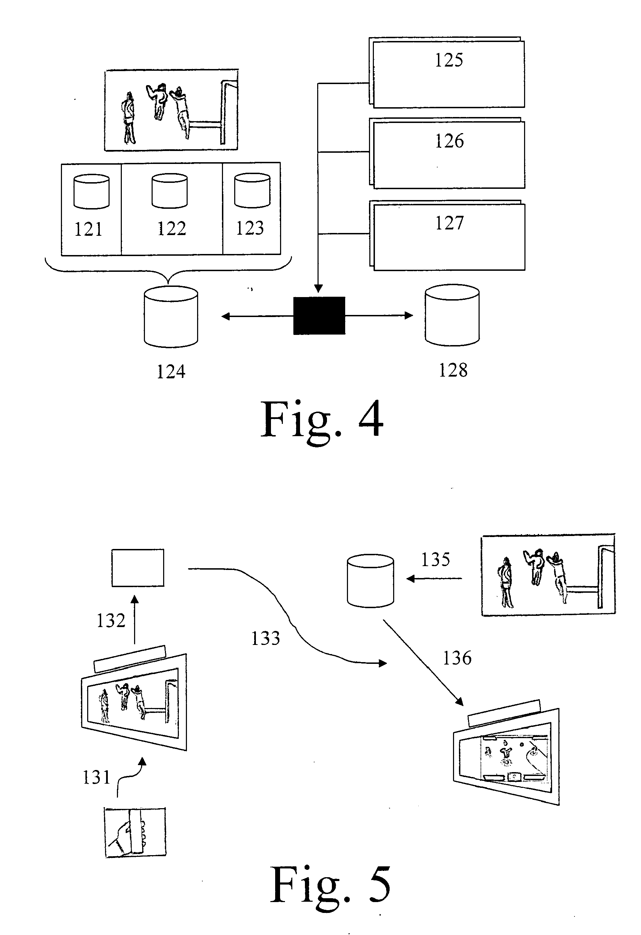

   In Fig. 4 a third overview of a computer game system according to the invention is shown. Ambient sensors 121, automatic and/or manual game play sensors 122 and statistical sensors 123 together form sensors 124 coupled to databases 128, whereby a first possible triggering 125 is done from a live event, a second possible triggering 126 is done from a television and a third possible triggering 127 is done from a personal computer.
   In Fig. 5 a fourth overview of a computer game system according to the invention is shown. A user watching a live event on the television gets the idea of using auxiliary information from the live event and triggers via a transmitter in the form of a remote control the storage of this auxiliary information in a database and/or triggers via a transmitter in the form of a remote control the retrieving of this auxiliary information from the database in which it is already (being) stored. Thereto, a remote control interface or set top box converts first trigger information 131 into second trigger information 132. Third trigger information 133 is sent via a network towards the database. This database receives sensor information 135 and sends auxiliary information 136 to a user's processor-interface. At a later stage in time, the user can play the computer game thereby using the auxiliary information 136.
   The auxiliary information may be event dependent and/or event independent information, and may further be used for improving artificial intelligence present in the main information, for example by adding the auxiliary information to experience information generated before by playing the computer game.
   The network 40 may comprise several sub-networks, such as for example a mobile telephone network, a fixed telephone network, an internet network, a data network etc. In case of the trigger information 4 originating from the processor 14, either the interface 13 may need to get a transmitting part in addition to its receiving part or the interface 13 is only used for receiving the auxiliary information in which case a further interface not shown is to be introduced for transmitting the trigger information.
   The interface 13 for example comprises a modem, and the remote receiver 23 for example comprises a detector. The memory 12 for example comprises a hard disk or a rewritable disk. At the interface-processor location 11, the memory 12, the processor 14, the interface 13 and the mmi 15 may be at least partly integrated and/or may have different sub-locations. At the receiver-generator 21, the remote receiver 23, the remote generator 22 and the sensor 24 may be at least partly integrated and/or may have different sub-locations.
   The expression "for" in for example "for playing", "for storing", "for downloading" and "for processing" etc. and the expression "arranged to" etc. do not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.
   The steps/functions of downloading and processing do not exclude further steps/functions, like for example, inter alia, the steps/functions as described for the Fig. 1-5.

## Claims

1. A computer game system (10) for playing a computer game and comprising
- a memory (12) for storing main information (1), which main information (1) defines a main part of the computer game;
- an interface (13) for downloading auxiliary information (3) from a remote generator (22), which auxiliary information (3) defines an auxiliary part of the computer game; and
- a processor (14) for processing the main information (1) in dependence of control information (6);
**characterized in that** the processor (14) is arranged to process the main information (1) with respect to the auxiliary information (3) in a non-synchronized way.

2. The computer game system (10) as defined in claim 1, **characterized in that** the auxiliary information (3) defines a starting condition of the computer game, the processor (14) being arranged to process the main information (1) from a start of the computer game until an end of the computer game and the interface (13) being arranged to download the auxiliary information (3) before the start of the computer game.

3. The computer game system (10) as defined in claim 1, **characterized in that** the computer game system (10) is further defined by
- a downloading phase situated before a start of the computer game for downloading the auxiliary information (3) for defining a starting condition of the computer game; and
- a playing phase situated after the start of the computer game for processing the main information (1) in dependence of the control information (6).

4. The computer game system (10) as defined in claim 1, 2 or 3, **characterized in that** the computer game system (10) further comprises
- a remote receiver (23) for receiving trigger information (4) from a transmitter (32); and
- the remote generator (22) for generating the auxiliary information (3).

5. The computer game system (10) as defined in claim 4, **characterized in that** the computer game system (10) further comprises
- the transmitter (32) for transmitting the trigger information (4) to the remote receiver (23).

6. The computer game system (10) as defined in claim 5, **characterized in that** the transmitter (32) is a remote transmitter, with the remote receiver (23) and the remote generator (22) being located at a receiver-generator (21) location different from an interface-processor location (11) and with the remote transmitter being located at a transmitter location (31) different from the receiver-generator location (21) and different from the interface-processor location (11).

7. The computer game system (10) as defined in any one of claims 1-6, **characterized in that** the processor (14) is arranged to process the main information (1) in an entirely artificial way.

8. The computer game system (10) as defined in any one of claims 1-7, **characterized in that** the interface (13) is arranged to download the auxiliary information (3) in a non-periodical way.

9. A processor (14) for use in a computer game system (10) for playing a computer game, which processor (14) is arranged to process main information (1) in dependence of control information (6), which main information (1) defines a main part of the computer game, the computer game system (10) comprising an interface (13) for downloading auxiliary information (3) from a remote generator (22), which auxiliary information (3) defines an auxiliary part of the computer game, **characterized in that** the processor (14) is arranged to process the main information (1) with respect to the auxiliary information (3) in a non-synchronized way.

10. An interface (13) for use in a computer game system (10) for playing a computer game, which interface (13) is arranged to download auxiliary information (3) from a remote generator (22), which auxiliary information (3) defines an auxiliary part of the computer game, the computer game system comprising a processor (14) for processing main information (1) in dependence of control information (6), which main information (1) defines a main part of the computer game, **characterized in that** the processor (14) is arranged to process the main information (1) with respect to the auxiliary information (3) in a non-synchronized way.

11. A method for playing a computer game and comprising the steps of
- downloading auxiliary information (3) from a remote generator (22), which auxiliary information (3) defines an auxiliary part of the computer game; and
- processing main information (1) in dependence of control information (6), which main information (1) defines a main part of the computer game;
**characterized in that** the processing step is performed with respect to the auxiliary information (3) in a non-synchronized way.

12. A processor program product for playing a computer game and comprising the functions of
- downloading auxiliary information (3) from a remote generator (22), which auxiliary information (3) defines an auxiliary part of the computer game; and
- processing main information (1) in dependence of control information (6), which main information (6) defines a main part of the computer game;
**characterized in that** the processing function is performed with respect to the auxiliary information (3) in a non-synchronized way.

13. A remote receiver (23) for use in a computer game system (10) for playing a computer game, which computer game system (10) comprises
- a memory (12) for storing main information (1), which main information (1) defines a main part of the computer game;
- an interface (13) for downloading auxiliary information (3) from a remote generator (22), which auxiliary information (3) defines an auxiliary part of the computer game; and
- a processor (14) for processing the main information (1) in dependence of control information (6);
**characterized in that** the processor (14) is arranged to process the main information (1) with respect to the auxiliary information (3) in a non-synchronized way, the remote receiver (23) being arranged for receiving trigger information (4) from a transmitter (32) and the remote generator (22) being arranged to generate the auxiliary information (3) in response to a reception of the trigger information (4).

14. A transmitter (32) for use in a computer game system (10) for playing a computer game, which computer game system (10) comprises
- a memory (12) for storing main information (1), which main information (1) defines a main part of the computer game;
- an interface (13) for downloading auxiliary information (3) from a remote generator (22), which auxiliary information (3) defines an auxiliary part of the computer game; and
- a processor (14) for processing the main information (1) in dependence of control information (6);
**characterized in that** the processor (14) is arranged to process the main information (1) with respect to the auxiliary information (3) in a non-synchronized way, the transmitter (32) being arranged to transmit trigger information (4) to a remote receiver (23), the remote receiver (23) being arranged to receive the trigger information (4) from the transmitter (32) and the remote generator (22) being arranged to generate the auxiliary information (3) in response to a reception of the trigger information (4).
